# EUROPEAN PATENT APPLICATION

(11) **EP 2 020 508 A1**
(43) Date of publication of application: **04.02.2009**
(21) Application number: 07425484.8
(22) Date of filing: 30.07.2007
(51) Int. Cl.: F04C 28/28, F04B 49/10, F16K 17/16, F04C 18/344

(54) **Overpressure safety device for a vacuum pump**

(71) Applicant: VARIAN S.p.A., 10040 Leini' (Torino) (IT)
(72) Inventor: Carboneri, Roberto, 10036 Settimo Torinese (Torino) (IT); Perrotta, Jonatan, 10034 Chivasso (Torino) (IT)
(74) Representative: Robba, Pierpaolo

(57) **Abstract**

The present invention relates to a safety device for a vacuum pump, arranged to be associated with a duct putting the interior of the casing of said vacuum pump in communication with the outside environment, According to the invention, said safety device includes a breakable member (3) which breaks when subjected to a pressure which is at least equal to a predetermined threshold (p_{break}) chosen so that said member breaks in case of too high an overpressure which could damage the pump, and remains unbroken at operating pressures during normal operation of said pump.

## Description

The present invention relates to a safety device for a vacuum pump. More particularly, the present invention relates to a safety device against overpressures that could damage a vacuum pump.

The safety device according to the invention can be incorporated in vacuum pumps of any kind. Yet, said safety device is applied in particular in vacuum pumps that discharge the pumped gas directly at atmospheric pressure, i.e. substantially without the need for a forepump. More particularly, said safety device can be advantageously applied to oil rotary vacuum pumps.

Oil rotary vacuum pumps are generally used to attain low vacuum conditions, i.e. in a pressure range from atmospheric pressure down to about 10⁻¹ Pa.

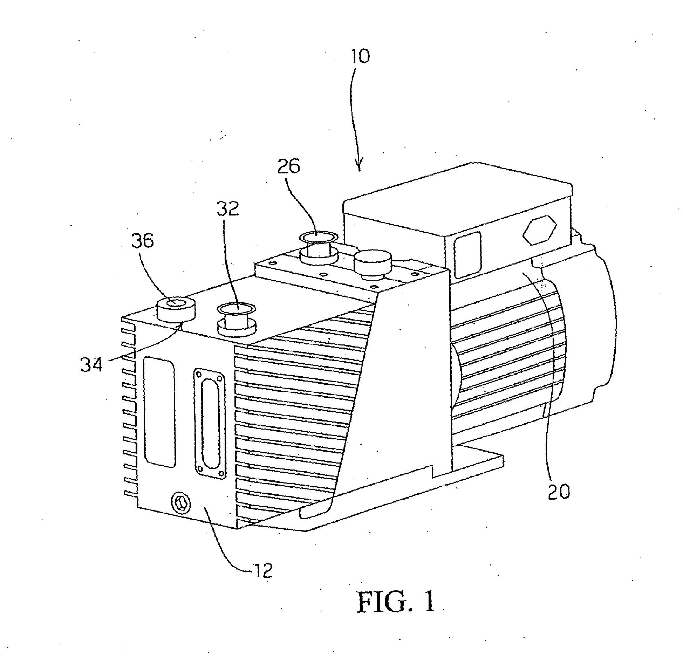

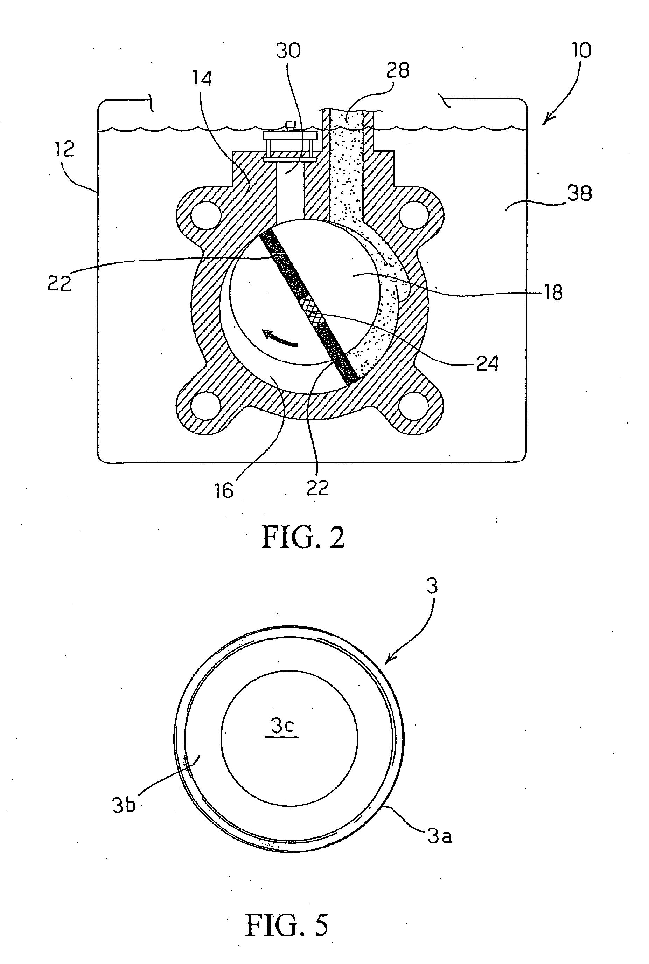

As shown in Figs. 1 and 2, known oil rotary vacuum pumps 10 generally comprise a first external casing 12, in which a second casing 14 is located within which a stator surrounding a cylindrical chamber 16 is defined. Chamber 16 accommodates a cylindrical rotor 18, which is rotated by a motor 20 associated with vacuum pump 10 and has an axis parallel with the axis of said cylindrical chamber 16 but eccentrically located with respect to that axis. One or more radially movable radial vanes 22 (two in the illustrated embodiment) are mounted on said rotor 18 and are kept against the wall of said chamber 16 by means of springs 24.

Gas is sucked through suction port 20 and passes, through a suction duct 28, into chamber 16 where it is pushed and thus compressed by vanes 22, and then is exhausted through an exhaust duct 30 ending at a corresponding exhaust port 32.

A proper amount of oil is introduced into external casing 12 through port 34 of a supply duct provided to this aim. The port is then sealed by a cap 36 so that the second internal casing 14 is immersed in an oil bath 38, which acts as coolant and lubricating fluid. Actually, according to the prior art, some oil passes from bath 38 into said chamber 16 and forms a thin film that ensures tightness between vanes 22 of rotor 18 and the wall of said chamber 16.

Examples of oil rotary pumps are disclosed in documents WO 97/04236 and FR 2,554,517.

A drawback of prior art oil rotary pumps is that, in case an overpressure is generated inside the pump due to failure, no emergency system is provided to reduce and manage said overpressure.

Thus, the overpressure thus generated cannot be released and, if the cause of the failure having generated the overpressure is not timely removed, the oil rotary pump can be severely damaged.

By way of example, it can be assumed that a clumsy user accidentally connects suction port 26 of vacuum pump 10 to the high pressure side, e.g. the outside environment, and exhaust port 32 of said vacuum pump 10 to the low pressure side, e.g. a vacuum chamber. Due to such inversion of suction and exhaust, vacuum pump 10 will suck air at atmospheric pressure from the outside environment and will discharge it into a hermetically sealed space. This will result in a quick pressure increase inside the vacuum pump and, in the absence of an emergency system for reducing such pressure, in severe damages to the vacuum pump.

In particular, due to the wide surface offered by the walls of the pump casing relative to the outside environment, which typically is at atmospheric pressure, the force resulting from too high a pressure can directly lead to the complete structural collapse of the casing itself.

It is an object of the present invention to prevent the occurrence of accidents of the kind described above, by providing a safety device preventing the pressure inside a vacuum pump casing from increasing above a predetermined safety threshold.

The above and other objects are achieved by means of a safety device according to the invention, as claimed in the appended claims.

Thanks to the provision of the safety device arranged on the port of a duct connecting the interior of the vacuum pump casing to the outside environment and to equipping said device with a breakable member which breaks in the presence of a pressure equal to or higher than a predetermined threshold, the safety device according to the invention allows preventing accidents and damages to the pump itself, once said threshold has been properly chosen.

Advantageously, said threshold is low enough to be sensibly lower than the pressure value at which the vacuum pump components would be damaged, so that the breakable member breaks before the pump can undergo any permanent damage.

Also advantageously, said threshold is high enough to be sensibly higher than the pressure values existing inside the vacuum pump during storage, transportation, installation and normal operation, so that the safety device can be directly mounted during vacuum pump manufacturing without the risk that during the subsequent operations the breakable member breaks too early, i.e. when no actual risk exists for the pump.

According to a preferred embodiment of the present invention, the safety device is used to close the port of a duct already existing in a known pump, which port is different from the suction or exhaust ports. In particular, in case of application to oil rotary vacuum pumps, said safety device is used to close the port of the supply duct of the oil reservoir and it replaces the cap conventionally used.

Advantageously, according to that preferred embodiment of the invention, the safety device can be embodied into already existing vacuum pumps without need for structural modifications.

According to a variant embodiment, the safety device can be mounted on the port of a duct provided to that aim, so as to prevent inadvertent tampering of the safety device during normal operation or normal maintenance of the pump, e.g. when filling the oil reservoir.

A preferred embodiment of the invention, given by way of non limiting example, will now be described in more detail below, with reference to the accompanying drawings, in which:
- Fig. 1 is a schematic perspective view of an oil rotary vacuum pump of known type;
- Fig. 2 is a schematic cross-sectional view of the vacuum pump shown in Fig. 1;
- Fig. 3 is a cross-sectional view of the safety device according to the invention;
- Fig. 4 is an exploded cross-sectional view of the safety device shown in Fig. 3;
- Fig. 5 is a top view of the breakable member of the safety device shown in Figs. 3 and 4.

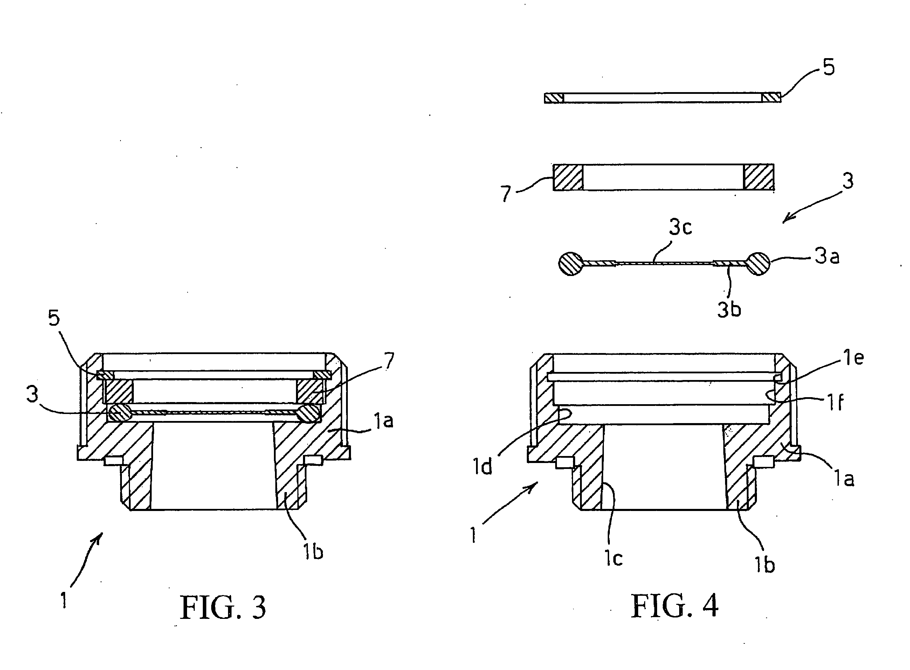

Referring to Figs. 3 and 4, the safety device according to the invention comprises a cylindrical body 1 having a head 1a and a threaded stem 1b that can be coupled with the internal thread of a corresponding port of a duct that puts the interior of a vacuum pump casing in communication with the outside environment.

In particular, in case of application to oil rotary vacuum pumps of the kind shown in Figs. 1 and 2, stem 1b of body 1 of the safety device is arranged to be screwed in the inlet port of the supply duct for the oil reservoir, shown at 34 in Fig. 1, and replaces the cap shown at 36 in Fig. 1

According to an alternative embodiment, the vacuum pump can include a second duct, specially provided, which puts the interior of the vacuum pump casing in communication with the outside environment, and the safety device according to the invention is coupled with the port of that second duct.

According to the invention, body 1 of the safety device further has an axial through-hole 1c forming a channel establishing communication between the interior of a vacuum pump casing, e.g. the outer casing in an oil rotary vacuum pump, and the outside environment.

By way of example, if the safety device replaces cap 36 of the oil reservoir in an oil rotary vacuum pump, stem 1b and head 1a of the body will have a diameter of 22 to 30 mm and 30 to 40 mm, respectively, whereas axial hole 1c will have a diameter of 12 to 17 mm.

Still in accordance with the invention, said axial through-hole 1c is closed by a breakable member 3, which is received in a first circumferential seat 1d formed on body 1 and which breaks if subjected to a pressure equal to or higher than a predetermined threshold p_{break}.

Advantageously, once a limit maximum pressure pₘₐₓ, corresponding to the minimum pressure at which the components of the oil rotary vacuum pump become damaged, has been determined, the material, the size and the structure of breakable member 3 are chosen so that p_{break} < pₘₐₓ.

Moreover, once determined the maximum pressure pₘᵢₙ to which the components of the oil rotary vacuum pump are subjected during the usual phases of storage, transportation (in particular air transportation), installation and normal operation of the vacuum pump, the material, the size and the structure of breakable member 3 are chosen so that p_{break} > pₘᵢₙ.

As a result, pressure threshold p_{break} at which breakable member 3 breaks is determined within a pressure range that on the one side prevents the occurrence of accidents damaging the vacuum pump structure, and on the other hand prevents the accidental breakage of the breakable member during normal life of said pump.

By way of example, in case of application to known oil rotary vacuum pumps, taking into account the components, the structure and the operating specifications of said pumps, said pressure range will generally be from pₘᵢₙ = 1.5 bars (0.15 Mpa) to pₘₐₓ = 3.0 bars (0.3 Mpa). In particular the value of p_{break} is advantageously set to about 2.0 bars (0.2 Mpa).

Still referring to Figs. 3 and 4, breakable member 3 is retained within its seat 1d by using a "Seeger" retaining ring 5, in turn mounted with interference in a second seat 1e formed to this aim in head 1a of body 1. Preferably, a spacer ring 7 is arranged between breakable member 3 and "Seeger" retaining ring 5 and is received in a third intermediate seat If formed to this aim in head 1a of body 1.

As clearly shown in Fig, 3, "Seeger" retaining ring 5 not only keeps breakable member 3 in position, but it causes also axial compression of edge 3a of said member 3 and consequently a deformation thereof, thereby ensuring vacuum tightness during normal pump operation, as it will be described below in more detail.

The above description clearly shows that, during normal operation of the vacuum pump, when pressure inside the casing of said pump is lower than pₘᵢₙ, and consequently also lower than p_{break}, breakable member 3 of the safety device keeps unbroken, thus ensuring vacuum tightness.

If, because of a mounting error or a failure, pressure inside the pump casing increases up to threshold p_{break}, breakable member 3 of the safety device breaks, thereby putting the interior of the vacuum pump casing in communication with the outside environment through hole 1c and thus allowing the accumulated overpressure to be discharged to the outside before the pressure inside the pump casing reaches critical value pₘₐₓ.

Advantageously, according to the invention, body 1 of the safety device can be made of plastics, e.g. a polyamide-based polymer, but other types of materials can also be used. Clearly, body 1 as well as spacer ring 7 and "Seeger" retaining ring 5 are preferably to maintain their structural integrity at pressures lower than or equal to p_{break}: otherwise stated, breakable member 3 must break first, at a pressure at which the structural integrity of the other components of the safety device is ensured.

Referring to Fig. 5, breakable member 3 of the safety device according to the invention is shown in greater detail.

According to the preferred embodiment shown herein, said breakable member consists in a membrane 3 made of Viton® or similar elastomeric material. Membrane 3 comprises:
- a first, thicker circumferential portion 3a;
- a second peripheral portion 3b of intermediate thickness;
- a third, thinner central portion 3c.

The first circumferential portion 3a preferably has a thickness in the range 1.5 to 2.0 mm and is intended to ensure vacuum tightness once membrane 3 is placed in its seat 1d and is locked in said seat by "Seeger" retaining ring 5 (see Fig. 3). Otherwise stated, said first circumferential portion 3a is equivalent to an O-ring gasket integrated into membrane 3.

Central portion 3c that, when membrane 3 is placed in its seat 1d, is substantially aligned with axial through-hole 1c of body 1, is thinner than the rest of membrane 3 and forms therefore the membrane part that first fails when pressure increases. Otherwise stated, the structure, and more particularly the thickness, of central portion 3c of membrane 3 determines the pressure at which the membrane will lose its integrity, and consequently, the structure and the thickness of central portion 3c of membrane 3 will be chosen so that said central portion 3c breaks at a pressure of about p_{break}.

Taking into account the components, the structure and the operating specifications of known oil rotary vacuum pumps, central portion 3c of membrane 3 will have a thickness in the range 0.01 to 0.2 mm and preferably a thickness of about 0.1 mm.

Peripheral portion 3b of membrane 3 has instead of thickness of some tenths of millimetre (e.g. 0.5 mm) and merely serves to connect sealing circumferential portion 3a and breakable central portion 3c.

Still considering the application to known oil rotary vacuum pumps, membrane 3 will have in the whole a diameter in the range 22 to 30 mm and central portion 3c of said membrane 3 preferably will have a diameter in the range 12 to 17 mm.

In this respect it is to be appreciated that, in the preferred embodiment described above, membrane 3 not only acts as the breakable member of the safety device, but also ensures vacuum tightness,

Yet, it is possible to envisage that the breakable member of the safety device does not simultaneously provide also the vacuum tightness function and that it is associated with a separate member providing for such a function. In such case, it is possible to use a thinner membrane, even of substantially uniform thickness, associated with a conventional O-ring gasket, so that the functions of safety breakage in case of failure and of vacuum tightness during normal operation are decoupled.

Moreover, even if in the illustrated embodiment breakable member 3 is made of polymeric material, other materials could also be employed, such as metals (e.g. aluminium), plastic materials or amorphous materials (e.g. glass). Clearly, the thickness chosen for the breakable member will change depending on the chosen material.

It is also clear that the thickness chosen for the breakable member will also change depending on the area of said breakable member, since the force to which it will be subjected during operation is the product of the pressure by the surface onto which said pressure is applied.

Moreover, a breakable member integrally made with body 1 of the safety device could even be employed.

The above description clearly shows that the safety device according to the invention attains the intended aim.

It is further clear that several other changes and modifications to the embodiment described and illustrated here are possible without departing from the scope of the present invention.

In particular, even if application to oil rotary vacuum pumps has been often referred to, the safety device according to the invention is not only applicable to said kind of pumps. On the contrary, given a vacuum pump having at least one casing, a first port for the inlet of a gas, a second port for the outlet of said gas and one or more pumping stages for pumping said gas from said first port to said second port, the safety device according to the invention could be associated with a port of any duct that, in said vacuum pump, is capable of putting the interior of the casing of said pump in communication with the outside environment.

## Claims

1. A safety device for a vacuum pump of the kind having a casing, a first port for the inlet of a gas, a second port for the outlet of said gas and one or more pumping stages for pumping said gas from said first port to said second port, said safety device being associable with a third port of a duct putting the interior of the vacuum pump casing in communication with the outside environment, **characterised in that** the safety device includes a body (1) with an axial through-hole (1c) for putting the interior of the vacuum pump casing in communication with the outside environment, said axial through-hole (1c) being closed by a breakable member (3) which breaks when a predetermined pressure threshold (p_{break}) is exceeded.

2. The safety device as claimed in claim 1, wherein said body is constructed so as to maintain its structural integrity up to a pressure higher than said threshold (p_{break}).

3. The safety device as claimed in claim 1, wherein said predetermined threshold (p_{break}) is lower than the minimum pressure (pₘₐₓ) at which the components of said vacuum pump become damaged.

4. The safety device as claimed in claim 3, wherein said predetermined threshold (p_{break}) is lower than the maximum pressure (pₘᵢₙ) to which the components of said vacuum pump are subjected during storage, transportation, installation and normal operation.

5. The safety device as claimed in claim 4, wherein said predetermined threshold (p_{break}) is in the range 1.5 to 3.0 bars and preferably is about 2.0 bars.

6. The safety device as claimed in claim 1, wherein said breakable member (3) is kept in said body (1) by a "Seeger" retaining ring (5), preferably with the interposition of a spacer ring (7).

7. The safety device as claimed in claim 1, further comprising a gasket ensuring vacuum tightness of said safety device at pressures lower than said predetermined threshold (p_{break}).

8. The safety device as claimed in claim 7, wherein said gasket is integrated into said breakable member (3).

9. The safety device as claimed in claim 1, wherein said breakable member (3) is integrally formed with said body (1).

10. The safety device as claimed in claim 1, wherein said breakable member includes a membrane (3).

11. The safety device as claimed in claim 10, wherein said membrane (3) includes a thicker circumferential portion (3a) and a thinner central portion (3c), preferably connected by a peripheral portion (3b) of intermediate thickness.

12. The safety device as claimed in claim 11, wherein said central portion (3c) of said membrane (3) has a thickness in the range 0.01 to 0.2 mm, and preferably of about 0.1 mm.

13. The safety device as claimed in claim 8, wherein said membrane has a substantially uniform thickness in the range 0.01 to 0.2 mm and preferably of about 0.1 mm.

14. The safety device as claimed in any of claims 10 to 13, wherein said membrane (3) has a diameter in the range 30 to 40 mm.

15. The safety device as claimed in claim 11, wherein said membrane (3) has a diameter in the range 30 to 40 mm and said central portion (3c) of said membrane has a diameter in the range 12 to 17 mm.

16. The safety device as claimed in any of claims 10 to 15, wherein said membrane (3) is made of Viton® or similar elastomeric material.

17. A vacuum pump having at least one casing, a first port for the inlet of a gas, a second port for the outlet of said gas and one or more pumping stages for pumping said gas from said first port to said second port, said pump further having a third port of a duct putting the interior of said casing in communication with the outside environment, **characterised in that** said third port is associated with a safety device as claimed in any of claims 1 to 16.

18. The vacuum pump as claimed in claim 17, wherein said vacuum pump is an oil rotary vacuum pump (10).

19. The vacuum pump as claimed in claim 18, wherein said safety device is associated with the port (36) of the oil supply duct of said oil pump.

20. A method for manufacturing a vacuum pump comprising at least the steps of:
- providing a vacuum tight casing including at least a first communication port and a second communication port;
- providing inside said casing at least one pumping stage capable of pumping a gas from said first communication port to said second communication port;
- providing a duct having a third communication port for putting the interior of said casing in communication with the outside environment;
- associating a safety device as claimed in any of claims 1 to 16 with said port of said duct.
